# EUROPEAN PATENT SPECIFICATION

(11) **EP 0 551 202 B1**
(45) Date of publication and mention of the grant of the patent: **22.09.1999**
(21) Application number: 93300110.9
(22) Date of filing: 07.01.1993
(51) Int. Cl.: E04B 1/24, E04B 7/02

(54) **Structural connection**
Konstruktionsverbindung
Connexion pour construction

(30) Priority: 10.01.1992 GB 9200456
(43) Date of publication of application: 14.07.1993
(73) Proprietor: WARD BUILDING COMPONENTS LIMITED, Malton, North Yorkshire YO17 8PQ (GB)
(72) Inventor: Wallis, Malcolm Robert, Kilham, Nr. Driffield, East Yorkshire (GB); Devanne, Jean Patrick, F-67390 Elsenheim (FR); Ker, Michael, F-67070 Metz (FR)
(74) Representative: O'Brien, John Augustine

(56) References cited:
- EP-A- 0 110 373
- DE-B- 1 675 636
- GB-A- 1 455 265
- GB-A- 1 590 435

## Description

This invention relates to a structural connection between first and second structural members, and more particularly, but not exclusively, to a structural connection between a pair of beams such as purlins, which are arranged in end to end relationship.

It is known to provide a spanning member to span a joint between two such structural members which comprise relatively thin walled metal rolled beam sections, and to secure the spanning member to each of the structural members using fasteners such as bolts (EP-A-110373).

To provide a sufficient bearing area between the bolts and the structural members to resist, for example, a force which tends to move the structural members axially away from or towards one another, either the cross sectional area of the bolts and their associated apertures in the structural members have to be inordinately large, or it is necessary to provide a large number of bolts. In this latter case it will be appreciated that where for example the structural members comprise purlins and the connection is being provided on site, the inserting and tightening of a large number of bolts is time consuming and this makes erection of a building which has a plurality of such connections, expensive. The use of a plate disposed outside the profile of a structural member with which it is used and having separate locking elements in place of bolts which pass through the structural members is known from GB-A-1455265, but the connection disclosed is not resistant to bending stresses imposed thereon.

According to one aspect of the invention we provide a connection between first and second structural members wherein the structural members each comprise an elongate profiled metal section having a web and a flange and are disposed in end to end relationship and a spanning member spans between, and is secured to, the first and second structural members and wherein the spanning member and first structural member are secured together by a fastener which passes through aligned apertures in the spanning member and first structural member, the first structural member having an opening, a locking element being integrally provided with, or in use secured relative to, the spanning member, and means comprising said fastener connecting the first structural member and spanning member together with the locking element located in the opening of the first member, characterised in that the spanning member is disposed within the profile of the structural members such that a first part lies alongside the flange of each structural member and a second part lies alongside the web of each structural member.

A third part of the spanning member may lie alongside a further web part of each structural member, said further web part being transverse to a web part alongside which the second part lies and spaced from said flange alongside which the first part lies.

Each structural member may comprise a web having a flange at opposite ends.

The structural members may each comprise a generally sigma shaped beam having a web with parallel flanges at its ends with respective inturned lips at their free ends, the flanges each extending generally perpendicularly to a median portion of the web which is connected by oppositely inclined further web parts to web parts which extend perpendicularly to the flanges.

The connection may comprise two spanning members disposed with the profile of the structural members, with a respective first part disposed alongside each flange.

The invention may be applied to a connection between structural members comprising C, Z, or other shaped beams, having a web part and a flange part.

It has been found that utilisation of such a locking element can permit the number of fasteners required in such a structural connection to be reduced without any loss of strength in the structural connection.

By 'end to end' we mean that one end of each of the structural members is substantially aligned transversely of the structural members with the opposite ends facing away from each other, and said one ends are disposed in contact, or with a gap therebetween.

Preferably, the locking element is provided on a connecting element, the connecting element having an aperture which is aligned with apertures of the spanning member and the first structural member, the aligned apertures receiving a fastener to permit the connecting element and the spanning member to be secured to the first structural member. Thus the spanning member may have an opening aligned with the opening of the first structural member whereby the locking element can pass through the opening in the spanning member into the opening of the first structural member, or through the opening of the first structural member into the opening of the spanning member.

The connecting element may comprise a second locking element, the aperture for the fastener being located between the two locking elements, and the members with which the connecting element is engaged having second aligned openings in which the second locking element is located.

The connecting element may conveniently be generally of U-shape, the ends of the limbs of the U providing the locking elements, and the base of the U having provided therein the aperture for the fastener.

The connecting element may comprise more than two locking elements which may extend from a base in different directions, each locking element being provided on a limb of the connecting element.

Conveniently the connecting element is made of metal strip as a pressing. Alternatively, the connecting element may comprise a generally planar element, with one or more locking elements projecting from one side thereof, the or each locking element being provided by pressing the locking element out of the general plane of the planar element, or casting or forging the locking element with the remainder of the element, as desired.

Instead of providing a connecting element, the spanning member may be integrally provided with one or more locking elements, the or each locking element, in use, being located in a corresponding opening in the first structural member. Thus the spanning member and first structural member may be secured together by a fastener such as a bolt which passes through aligned apertures in the spanning and first structural members.

Where a plurality of locking elements are provided, preferably these are positioned around the aperture in the first structural member.

The or each locking element may comprise a bearing face arranged generally transversely to a direction in which a force to separate the first and second structural members acts. For example, where the structural members are generally elongate and the structural connection experience forces tending to move the structural members generally axially away from or towards one another, the bearing face of the locking element may extend generally transversely of the structural members. Alternatively, where the structural connection experiences a force which tends to move the structural members transversely relative to one another, as can occur when one or both of the structural members bend, the bearing face of the or each locking element may extend generally axially of the structural members and hence transversely to the direction of the shear force.

The locking element may have a plurality of bearing faces which extend in different directions so as to provide rigidity to the structural connection in a plurality of directions. Hence, the locking elements may be polygonal in section having three, four, five or more sides. However, the locking elements may be of circular or elliptical configuration if desired, or partially polygonal and partially curved as desired.

It will be appreciated that in all the arrangements described, so that the locking element can give maximum rigidity to the structural connection, it is preferred that the opening in the first structural member corresponds in configuration to the locking element and is a close fit relative thereto so that the locking element can readily bear on the periphery of the opening to resist movement in the structural connection.

Preferably the spanning member is secured to the second structural member in substantially similar manner to that in which the spanning member is secured to the first structural member i.e. utilising one or more fasteners and there being one or more locking elements received in a, respective, opening of the second structural member and secured relative to the spanning member.

The first and second structural members may extend transversely to a further elongate structural member relative to which the purlin components are attached by a cleat, the structural connection between the structural members being provided adjacent the position where the cleat is attached.

A fastener which secures the first or second structural member to the spanning member may also secure the structural connection to the cleat which in use, secures the first and second structural members to, for example, a transverse further structural member. Thus for example where the first and second structural members each comprise components of a purlin, the further structural member may comprise a joist, rafter, or the like.

The cleat may be provided with an opening corresponding to the or each opening of the second structural member whereby the or each locking element may, in use, be located in the opening of the cleat, to add yet further rigidity to the structural connection.

According to a second aspect of the invention we provide a method of connecting together first and second structural members wherein the structural members each comprise an elongate profiled metal section having a web and a flange and wherein the method includes placing the first and second structural members end to end and providing a spanning member to span between the first and second structural members and wherein the spanning member is connected to the first structural member by a fastener which passes through respective aligned apertures in the first structural member and the spanning member, the first structural member having an opening, a locking element having integrally provided with, or secured relative to the spanning member, a locking element, the method further comprising locating the locking element in the opening of the first structural member and connecting the first structural members and spanning member together by means comprising said fastener, characterised in that the spanning member is disposed within the profile of the structural members such that a first part lies alongside the flange of each structural member and a second part lies alongside the web of each structural member.

The method may include securing the spanning member and hence the locking element relative to the second structural member, aligning an opening of the spanning member with an opening of the first structural member, locating the locking element in the aligned openings, and connecting the spanning member to the first structural member.

The spanning member may be connected to the first structural member by a bolt or other fastener which passes through respective aligned apertures in the first structural member and the spanning member.

The locking element may be carried on a connecting element which also has an aperture which may be aligned with the apertures of the first structural member and the spanning member, the method including the step of securing the connecting element to the first structural member and to the spanning member, with the fastener, and hence securing the locking element relative to the first structural member.

The invention will now be described with reference to the accompanying drawings in which :
FIGURE 1 is a perspective view partially broken away and partially exploded of a structural connection in accordance with the invention,
FIGURE 1a is an enlarged fragmentary section along the line I-I of Figure 1,
FIGURE 2 is a perspective view of an alternative spanning member for use in a structural connection in accordance with the invention,
FIGURE 2a is a fragmentary side section through an alternative structural connection utilising the spanning member of Figure 2,
FIGURE 3 is a cross section through a further structural connection in accordance with the invention,
FIGURE 4 is a perspective view of an alternative connecting element for use in a structural connection in accordance with the invention, FIGURE 5 is an illustrative view of an alternative structural connection in accordance with the invention,
FIGURE 6 is a view similar to Figure 5, but of a yet further structural connection in accordance with the invention,
FIGURES 7a,7b,7c,7d, are each perspective views of alternative connecting elements which may be used in a structural connection in accordance with the invention.

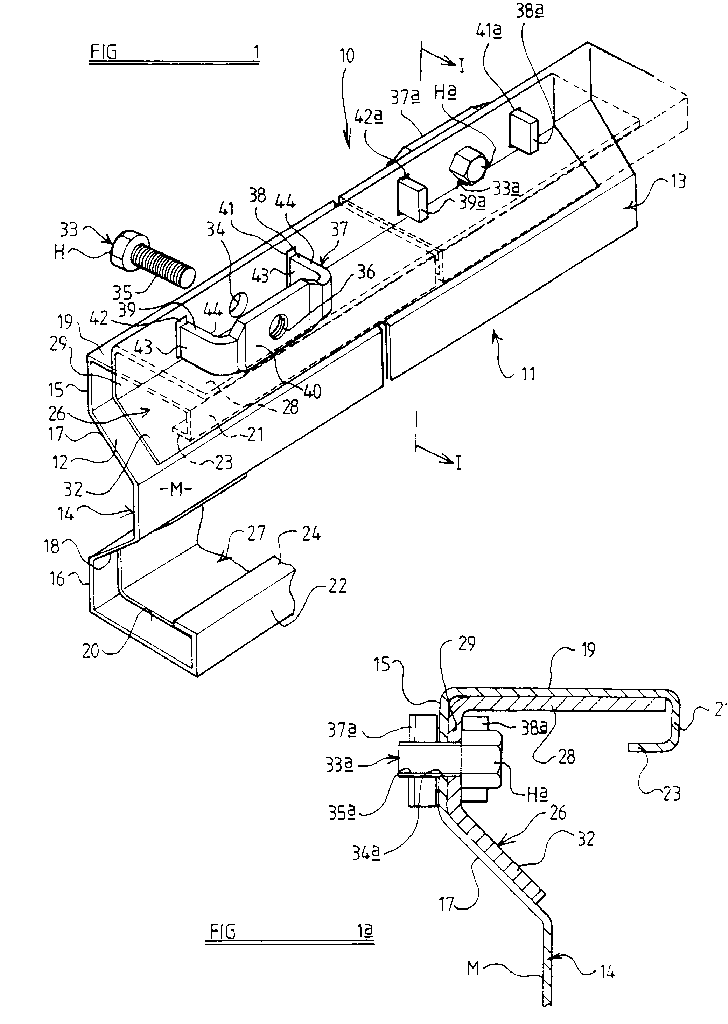

Referring to Figures 1 and 1a, there is shown part of a frame construction 10 for a building, the construction incorporating a structural connection 11 between a first structural member 12, in this example a purlin component and a second structural member 13, in this example another purlin component.

The purlin components 12,13, are arranged generally end to end but spaced slightly from one another.

In this example, each purlin component 12,13, is a generally sigma shaped beam made by cold rolling, having a web 14 comprising a median portion M, a pair of spaced apart web parts 15,16, which lie in a common plane which is parallel to but spaced apart from a plane containing the median portion M, each web part 15,16, being connected to the median portion M by a respective inclined further web part 17,18, and the purlin components 12,13, further comprising respective top and bottom flanges 19,20, which are generally perpendicular to their respective web parts 15,16, and each top and bottom flange 19,20, having an inturned lip 21,22, at its free end, each of which terminates in a further lip 23,24.

The purlin components 12,13, are connected together by a pair of spanning members 26,27, which are generally identically constructed, such that only spanning member 26 will be described in detail.

The spanning member 26 spans the joint between the purlin components 12,13, and is secured to each of the purlin components 12,13, as hereinafter described.

The spanning member 26 comprises a rolled metal section having a part 28 which extends along the insides of the top flanges 19, a further part 29 which extends along the insides of the web parts 15 of the purlin components 12,13, and an inclined part 32 which extends along the insides of the inclined further web part 17.

Thus the spanning members 26,27, can readily be inserted into the positions shown.

The spanning member 26 is secured to purlin component 12 by means of a bolt 33 which passes through aligned apertures 34 in the purlin component 12 and spanning member 26, with the head H of the bolt 33 being located on the outside of the purlin component 12 in engagement with web part 15 around the aperture 34. The threaded shank 35 of the bolt 33 is received in a threaded opening 36 in a connecting element 37, the connecting element 37 in this example comprising a generally U-shaped element having a pair of limbs 38,39, which provide locking elements as hereinafter explained, and a base 40 between the limbs 38,39, in which the aperture 36 is provided. Alternatively, the bolt 33 may be secured by means of a nut instead of aperture 36 being threaded.

The connecting element 37 may conveniently be made as a pressing from suitable metal strip or may be made in any other desired manner.

Either side of the apertures 34, in the spanning member 36 and the purlin component 12, there are openings 41,42, each of corresponding configuration to the ends of the limbs 38,39, of the connecting element 37, through which openings 41,42, the limbs 38,39, pass. When the bolt 33 is tightened, the limbs 38,39, are drawn fully into the openings 41,42, until the base 40 of the connecting element 37 engages the part 29 of the spanning member 26 which lies inside web part 15. Thus the locking elements 38,39, are secured relative to the purlin component 12 and the spanning member 26 and the spanning member is secured to the purlin component 12, with the locking elements 38,39, located in openings 41,42, of the purlin 12.

The locking elements 38,39, are generally rectangular in configuration and each provide a pair of bearing faces 43,44, which extend transversely of the purlin component 12 and so, in use, contact or at least lie very closely adjacent to the corresponding parts of the peripheries of the openings 41,42, of the purlin component 12. Hence any tendency for the spanning member 26 to move longitudinally relative to the purlin component 12, by virtue of for example, an axial force between the purlin components 12,13, is restrained not only by the bolt 33, but also by the bearing surfaces 43,44, of the locking elements 38,39, bearing on the respective parts of the peripheries of the openings 41,42.

Purlin component 13 is secured to the spanning member 26 similarly to the manner in which the spanning member 26 is secured to purlin component 12, although in the example shown, the respective connecting element 37a is positioned on the outside of the purlin component 13 such that its locking elements 38a,39a, extend inwardly of the purlin component 13, and the head Ha of the bolt 33a is received inside the purlin component 13 with its threaded shank 35a extending through aligned apertures 34a of the spanning member 26 and purlin 13 before being received by the connecting element 37a. However again, when the bolt 33a is tightened, the locking elements 38a,39a, of the connecting element 37a will be secured relative to the spanning member 26 and located in corresponding openings 41a,42a in the purlin component 13. Of course, if desired, both the connecting elements 37,37a could be positioned on the inside or outside of the respective purlin components 12,13, as desired.

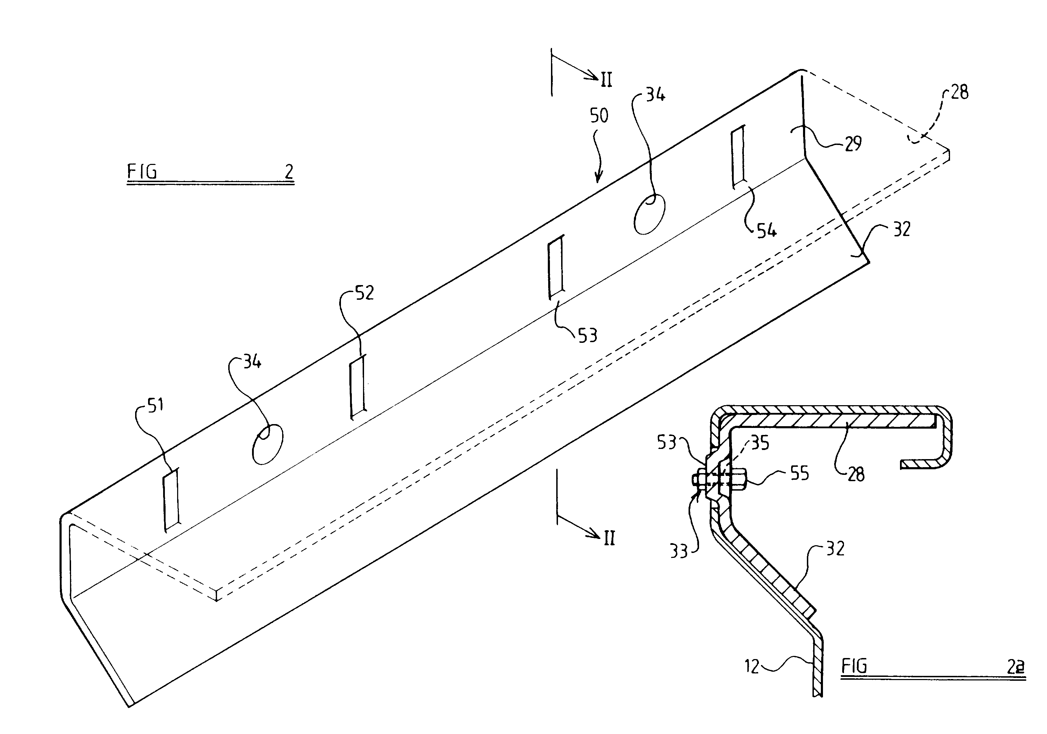

Referring now to Figure 2 and Figure 2a, an alternative arrangement is shown in which a spanning member 50 is provided which corresponds generally to the configuration of the spanning members 26,27, of Figure 1, and is intended for use with a pair of purlin components of the same cross sectional configuration as the purlin components 12,13, of Figure 1. Hence parts of the same configuration are indicated by the same reference numerals.

With the modified spanning member 50 of Figures 2 and 2a, a connecting element as such, is not required. Rather, locking elements 51 to 54 are integrally provided on the spanning member 50. These locking elements 51 to 54 comprise outwardly pressed regions in the part 29 of the spanning member 50.

The outwardly pressed regions 51,52 are, in use, located in openings of the purlin component 12 and are thus of substantially the same configuration as the ends of the limbs 38,39;38a,39a, of the connecting elements 37,37a, used with the Figures 1,1a construction.

Otherwise, the spanning member 50 is similar to spanning members 26,27, of Figures 1 and 1a, the member 50 having apertures 34 between the pairs of locking elements 51,52; 53,54, to receive bolts 33 which pass through aligned apertures in the purlins 12,13, to secure the spanning member 50 to the purlins 12,13. However, it is necessary either to provide nuts 55 to receive the threaded parts 35 of the bolts 33, or to thread the aperture 34 of the spanning member 50, where the spanning member 50 is made of sufficiently thick material and the bolt 33 is inserted from exteriorly of the purlin component as shown. Where nuts 55 are provided, these may be secured to the spanning member 50 in the correct position, for example by spot welding, to facilitate erection of the frame construction on site.

The pressed out regions 51-54, may simply comprise displaced material although particularly where the spanning member 50 is thin walled, the pressed out regions 51-54 may be partially pierced during the pressing operation.

It will be appreciated that in the Figures 2 and 2a arrangements, the pressed out regions 51 to 54 correspond in configuration with corresponding openings 41,42, of the purlin components 12,13, which again provides resistance to movement of the spanning member 50 relative to the purlin components 12,13, in an axial direction, in addition to the bolt connection.

When the purlin components 12,13, are particularly long, it may be necessary for the spanning members 26,27,50, to be longer than shown, in which case if desired, the spanning members 26,27, may be secured to each of the purlin components 12,13, by more than one bolt 33. For example in the Figures 1 and 1a arrangement, a pair of connecting elements 37 may be provided spaced along each of the, longer, spanning members 26,27, the spanning members 26,27, and the purlin components 12,13, having corresponding apertures 34, and openings 41,42 to accommodate further connecting elements 37,37a.

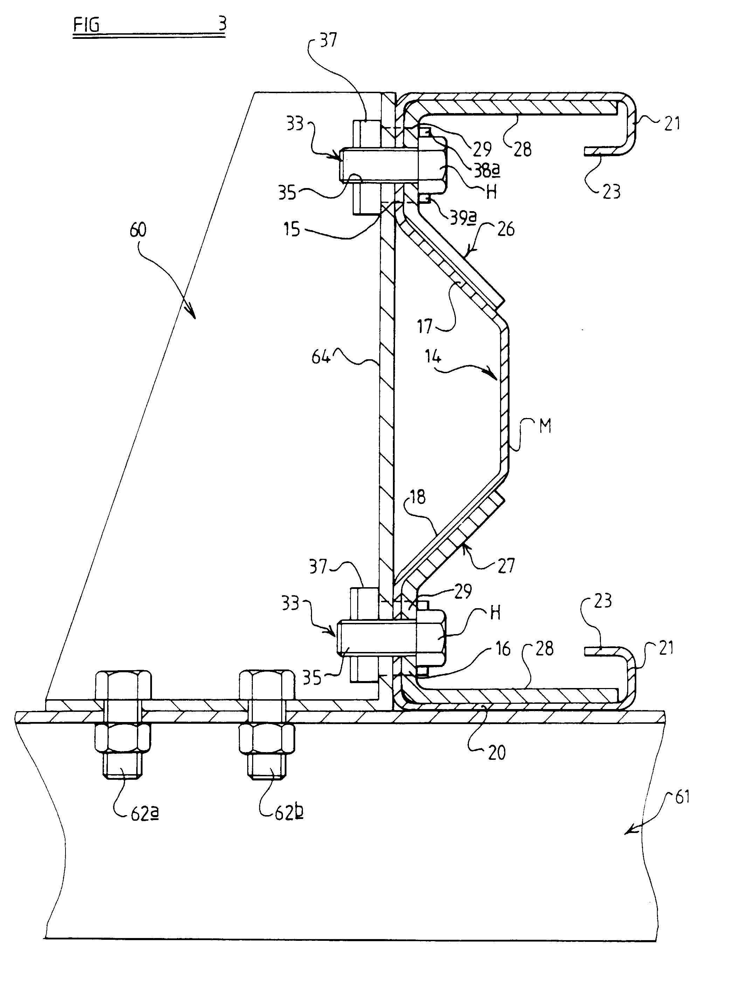

Referring now to Figure 3, an arrangement similar to that shown in Figures 1,1a, is shown, again with the same reference numerals indicating parts of similar configuration. In this arrangement, the structural connection also includes a cleat 60 which secures together the structural connection of the purlin components 12,13, and a transverse further structural member 61 which in this example comprises a joist. The joist 61 is secured to the cleat 60 by a pair of bolts 62a,62b, whilst the cleat 60 is secured to each of the purlin components 12,13, by the bolts 33 which also secure the spanning members 26,27, thereto. Connecting elements 37 essentially the same as indicated at 37a in Figure 1, are provided which each have locking elements 38a,39a, which are located in openings provided in their respective purlin components 12,13, and in the spanning members 26,27, but also in respective openings provided in a wall 64 of the cleat 60. Hence the structural connection is given further rigidity by virtue of the locking elements co-operating not only with the spanning members 26,27, and the respective purlin components 12,13, but also with the cleat 60.

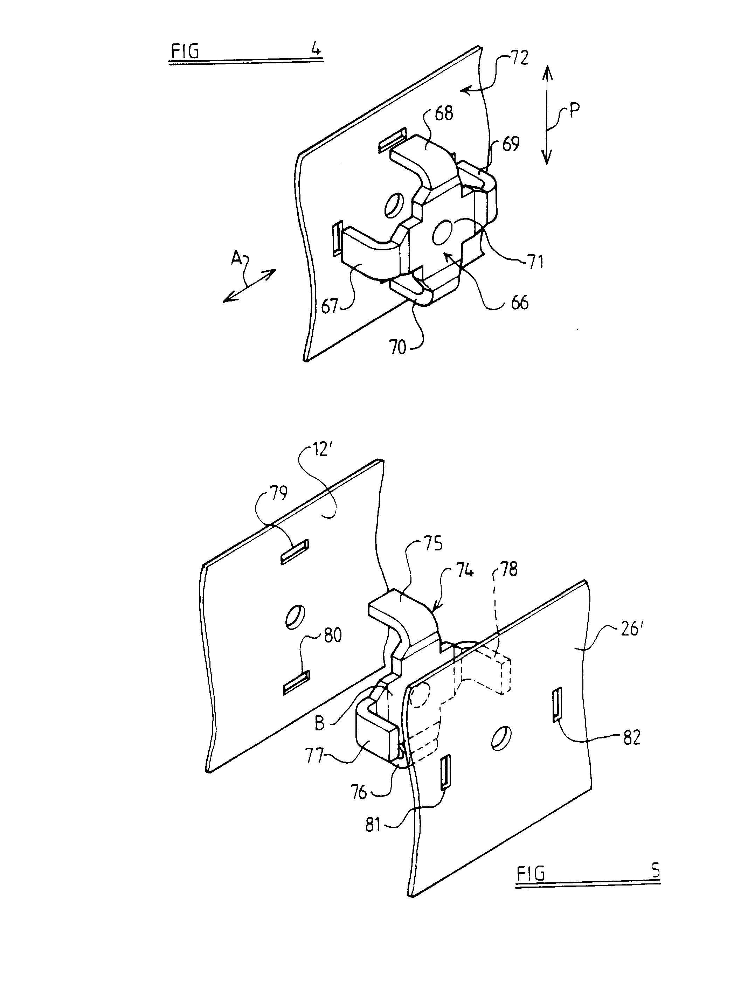

Figure 4 shows an alterative connecting element 66 which has four locking elements 67,68,69 and 70 secured to a base 71. Such a connecting element 66 is to be used with a spanning member 72 and purlin component which each has a corresponding aperture for each of the locking elements 67-70. It will be appreciated that the connecting element 66 of Figure 4 provides resistance to movement in the structural connection not only axially of the structural members (arrow A), but also perpendicularly to the structural members (arrow P), by virtue of the locking elements 68,70, at the top and bottom of the connecting element 66 providing bearing surfaces extending longitudinally axially of the purlin component to resist movement transversely of the purlin component.

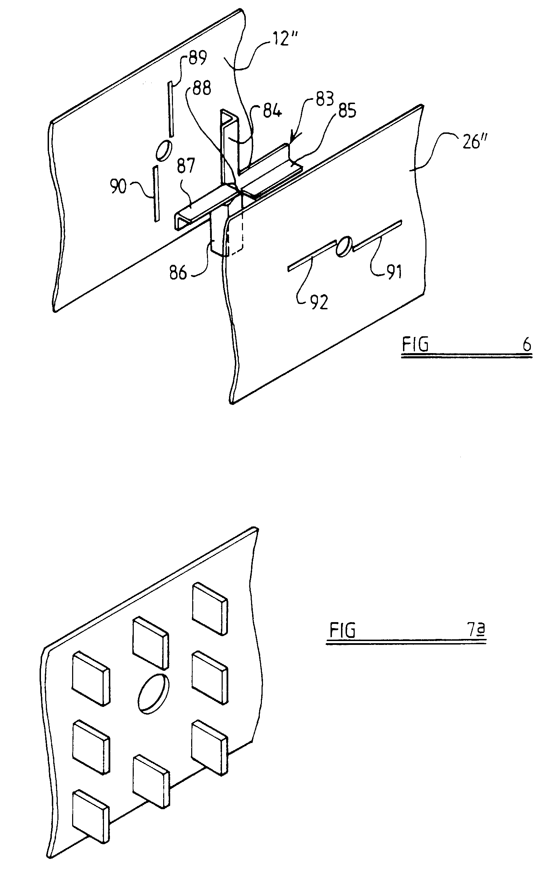

Figure 5 shows an arrangement similar to that shown in Figure 4, although in this arrangement the connecting element 74 is intended to be interposed between the structural member 12' and a spanning member 26'. The connecting element 74 comprises a base B from which extend four limbs 75-78 which provide locking elements. Top and bottom locking elements 75,76 face the structural member 12' and are received in corresponding openings 79,80, in the structural member 12', whilst locking elements 77,78, face the spanning member 26 and are received in openings 81,82, of the spanning member 26'.

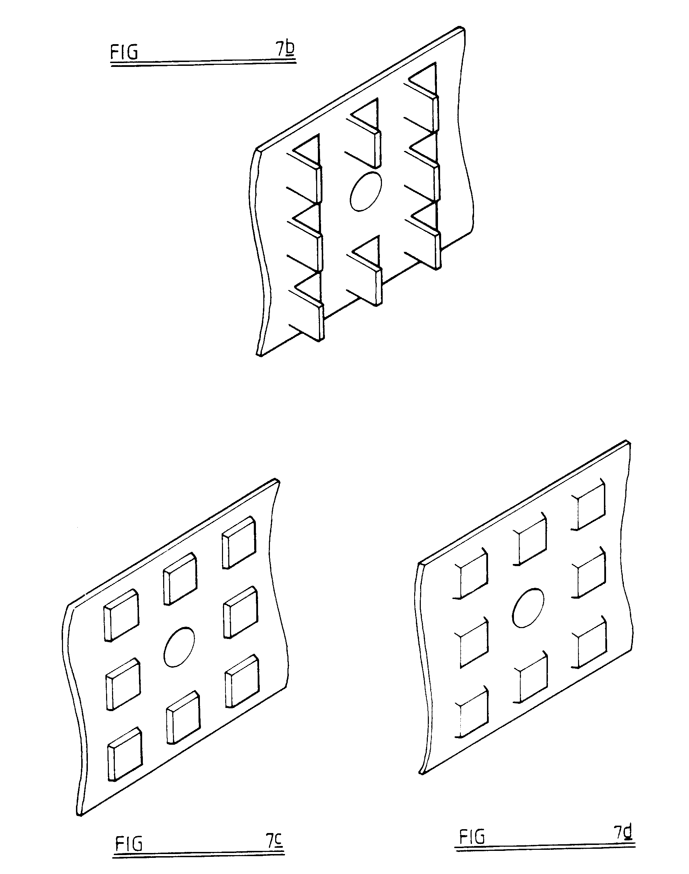

Figure 6 shows another arrangement of connecting element 83 intended to be interposed between a structural member 12" and a spanning member 26", although in this case, the locking elements are provided by flanges on arms 84 to 87 which extend from a base 88. Arms 84,86, are respectively top and bottom arms the flanges of which are received in corresponding slot openings 89,90, in the structural member 12" whereas the flanges of arms 85, 87, are received in corresponding slot openings 91,92, in the spanning member 26".

Figures 7a,7b,7c and 7d each show alternative arrangements of connecting elements suitable for use in a structural connection in accordance with the invention. The arrangements shown in Figure 7a and 7c may be made conveniently by forging or casting whereas the arrangements shown in Figures 7b and 7d are made by pressing out material from the general plane of the connecting element.

The connecting elements of Figures 7a to 7d each have an array of locking elements. Such an array of locking elements could be provided integrally with the spanning member rather than on a separate connecting element, thereby avoiding the need altogether to provide a connecting element.

Locking elements of alternative configuration to those described herein may be provided e.g. circular, polygonal or a combination of these locking elements may be provided.

In each of the connecting elements of Figures 4 to 7d, the respective connecting element is provided in the base thereof with an aperture for a fastener, to enable the spanning member, connecting element and respective structural member to be connected together.

Although the invention has been described with reference to a structural connection between a pair of purlin components, and has particular but not exclusive application to the construction of steel framed buildings, it will be appreciated that the invention may be employed to provide a structural connection between any two structural members.

## Claims

1. A connection between first and second structural members (12,13) wherein the structural members (12,13) each comprise an elongate profiled metal section having a web (14) and a flange (19) and are disposed in end to end relationship and a spanning member (26; 50) spans between, and is secured to, the first and second structural members (12,13) and wherein the spanning member (26; 50) and first structural member (12) are secured together by a fastener (33) which passes through aligned apertures (34, 36) in the spanning member (26; 50) and first structural member (12), the first structural member (12) having an opening (41,42), a locking element (38, 51) being integrally provided with, or in use secured relative to, the spanning member (26; 50), and means comprising said fastener (33) connecting the first structural member (12) and spanning member (26; 50) together, the locking element (38, 51) being located in the opening (41, 42) of the first member (12), characterised in that the spanning member (26; 50) is disposed within the profile of the structural members (12, 13) such that a first part (28) lies alongside the flange (19) of each structural member (12, 13) and a second part (29) lies alongside the web (14) of each structural member.

2. A connection according to Claim 1 wherein a third part (32) of the spanning member (26; 50) lies alongside a further web part (17) of each structural member (12, 13), said further web part (17) being transverse to a web part (15) alongside which the second part (29) lies and spaced from said flange (19), alongside which the first part (28) lies.

3. A connection according to Claim 1 or Claim 2 wherein each structural member (12, 13) comprises a web (14) having a flange (19, 20) at opposite ends.

4. A connection according to any one of the preceding claims wherein the structural members (12, 13) each comprise a generally sigma shaped beam having a web (14) with parallel flanges (19, 20) at its ends with respective inturned lips (21, 22) at their free ends, the flanges (19, 20) each extending generally perpendicularly to a median portion (M) of the web which is connected by oppositely inclined further web parts (17, 18) to web parts (15, 16) which extend perpendicularly to the flanges (19, 20).

5. A connection according to Claim 3 or Claim 4 wherein the connection comprises two spanning members (26, 27, 50) disposed within the profile of the structural members (12, 13) with a respective first part lying alongside each flange (19,20).

6. A connection according to any one of the preceding Claims wherein the locking element (38) is provided on a connecting element (37), the connecting element having an aperture (36) which is aligned with apertures (34) of the spanning member (26; 50) and the first structural member (12), the aligned apertures (34, 36), receiving the fastener (33) to permit the connecting element (37), and the spanning member (26; 50) to be secured to the first structural member.

7. A connection according to Claim 6, wherein the connecting element (37), comprises a second locking element (39), the aperture (34) for the fastener (33), being located between the two locking elements, and the members (12, 26) with which the connecting element is engaged having second aligned openings (41, 42), in which the second locking element is located.

8. A connection according to Claim 7 wherein the connecting element (37) is generally of U-shape, the ends of the limbs of the U providing the locking elements (38, 39), and the base (4) of the U having provided therein the aperture (36) for the fastener.

9. A connection according to any one of Claims 1 to 5 wherein the spanning member (50) is integrally provided with one or more locking elements (51; 52), the or each locking element (51, 52), is located in a corresponding opening (41, 41a, 42, 42a) in the first structural member.

10. A connection according to any one of Claims 6-9 wherein the spanning member (26; 50) is secured to the second structural member (13) in substantially similar manner to that in which the spanning member is secured to the first structural member (12), utilising one or more fasteners (33a) and there being one or more locking elements (38, 39; 53, 54) received in a, respective, opening (41a, 42a) of the second structural (13) member and secured relative to the spanning member.

11. A connection according to any one of the preceding claims wherein the first and second structural members (12, 13) extend transversely to a further elongate structural member (61) relative to which the purlin components are attached by a cleat (60), the structural connection between the structural members being provided adjacent the position where the cleat (60) is attached.

12. A connection according to Claim 11 wherein the first and second structural members (12, 13) each comprise components of a purlin, and the further structural member (61) comprises a joist, rafter, or the like.

13. A connection according to claim 11 or claim 12 wherein the cleat (60) is provided with an opening corresponding to the or each opening (41, 42, 41a, 42a) of the first or second structural member (12, 13) whereby the or each locking element (38, 39; 51, 52) may, in use, be located in the opening of the cleat (60), to add yet further rigidity to the structural connection.

14. A method of connecting together first and second structural members (12, 13) wherein the structural members each comprise an elongate profiled metal section having a web (14) and a flange (19) and wherein the method includes placing the first and second structural members (12, 13) end to end and providing a spanning member (26; 50) to span between the first and second structural members and wherein the spanning member (26; 50) is connected to the first structural member by a fastener (33) which passes through respective aligned apertures (34) in the first structural member (12) and the spanning member (26; 50), the first structural member (12) having an opening (41, 42), a locking element (38, 39; 51, 52) being integrally provided with, or secured relative to the spanning member (26; 50), the method further comprising locating the locking element (38, 39; 51, 52) in the opening (41, 42) of the first structural member and connecting the first structural members (12) and spanning member (26; 50) together by means comprising said fastener (33), characterised in that the spanning member (26; 50) is disposed within the profile of the structural members (12, 13) such that a first part (28) lies alongside the flange (19) of each structural member (12, 13) and a second part (29) lies alongside the web (14) of each structural member.

15. A method according to claim 14 comprising securing the spanning member (26, 50), and hence the locking element (38, 39; 51, 52) relative to the second structural member (13), aligning an opening (41, 42), of the spanning member with an opening (41, 42), of the first structural member (12), locating the locking element (38, 39; 51, 52) in the aligned openings (41, 42), and connecting the spanning member (26, 50), to the first structural member (12).

16. A method according to claim 15 wherein the locking element (38, 39; 51, 52) is carried on a connecting element (37), which also has an aperture (36) which is aligned with the apertures (34) of the first structural member (12) and the spanning member (26; 50), the method including the step of securing the connecting element (37) to the first structural member (12) and to the spanning member (26; 50), with the fastener (33), and hence securing the locking element (38, 39; 51, 52) relative to the first structural member.

## Patentansprüche

1. Eine Verbindung zwischen ersten und zweiten Bauteilen (12, 13), worin die Bauteile (12, 13) jeweils einen länglichen profilierten Metallabschnitt mit einem Steg (14) und einem Flansch (19) umfassen und mit ihren Enden aneinander angeordnet sind und ein Spannteil (26; 50) sich zwischen den ersten und zweiten Bauteilen (12, 13) erstreckt und daran gesichert ist und worin das Spannteil (26; 50) und das erste Bauteil (12) durch ein Verbindungselement (33), das durch ausgerichtete Öffnungen (34, 36) in dem Spannteil (26; 50) und dem ersten Bauteil (12) tritt, wobei das erste Bauteil (12) eine Öffnung (41,42) aufweist, ein Verriegelungselement (38, 51), das einteilig mit dem Spannteil (26; 50) oder im Gebrauch daran gesichert vorgesehen ist, und Mittel, die das das erste Bauteil (12) und das Spannteil (26; 50) bei in der Öffnung (41, 42) des ersten Teils (12) befindlichem Verriegelungselement (38, 51) miteinander verbindende Verbindungselement (33) umfassen, miteinander gesichert sind, dadurch gekennzeichnet, daß das Spannteil (26; 50) in dem Profil der Bauteile (12, 13) derart angeordnet ist, daß ein erster Teil (28) neben dem Flansch (19) jedes Bauteils (12, 13) liegt und ein zweiter Teil (29) neben dem Steg (14) jedes Bauteils liegt.

2. Eine Verbindung nach Anspruch 1, dadurch gekennzeichnet, daß ein dritter Teil (32) des Spannteils (26; 50) neben einem weiteren Stegteil (17) jedes Bauteils (12, 13) liegt, wobei der weitere Stegteil (17) schräg zu einem Stegteil (15), neben dem der zweite Teil (29) liegt, verläuft und im Abstand zu dem Flansch (19) angeordnet ist, neben dem der erste Teil (28) liegt.

3. Eine Verbindung nach Anspruch 1 oder Anspruch 2, dadurch gekennzeichnet, daß jedes Bauteil (12, 13) einen Steg (14) mit einem Fiansch (19, 20) an gegenüberliegenden Enden aufweist.

4. Eine Verbindung nach irgendeinem der vorangehenden Ansprüche, dadurch gekennzeichnet, daß die Bauteile (12, 13) jeweils einen im allgemeinen Sigma-förmigen Träger umfassen, der einen Steg (14) mit parallelen Flanschen (19, 20) an seinen Enden mit jeweiligen nach innen gedrehten Lippen (21, 22) an deren freien Enden aufweist, wobei die Flansche (19, 20) sich jeweils im allgemeinen senkrecht zu einem mittleren Abschnitt (M) des Steges erstrecken, der durch entgegengesetzt geneigte weitere Stegteile (17, 18) mit Stegteilen (15, 16) verbunden ist, die sich senkrecht zu den Flanschen (19, 20) erstrecken.

5. Eine Verbindung nach Anspruch 3 oder 4, dadurch gekennzeichnet, daß die Verbindung zwei Spannteile (26, 27, 50) umfaßt, die in dem Profil der Bauteile (12, 13) angeordnet sind, wobei ein jeweiliger erster Teil 7 neben jedem Flansch (19, 20) liegt.

6. Eine Verbindung nach irgendeinem der vorangehenden Ansprüche, dadurch gekennzeichnet, daß das Verriegelungselement (38) an einem Verbindungselement (37) vorgesehen ist, wobei das Verbindungselement eine Öffnung (36) aufweist, die zu Öffnungen (34) des Spannteils (26; 50) und des ersten Bauteils (12) ausgerichtet ist, und die ausgerichteten Öffnungen (34, 36) das Verbindungselement (33) zur Sicherung des Verbindungselements (37) und des Spannteils (26; 50) an dem ersten Bauteil aufnehmen.

7. Eine Verbindung nach Anspruch 6, dadurch gekennzeichnet, daß das Verbindungselement (37) ein zweites Verriegelungselement (39) umfaßt, wobei die Öffnung (34) für das Verbindungselement (33) zwischen den zwei Verriegelungselementen angeordnet ist und die Teile (12, 26), mit denen das Verbindungselement in Eingriff steht, zweite ausgerichtete Öffnungen (41, 42) aufweisen, in denen sich das zweite Verriegelungselement befindet.

8. Eine Verbindung nach Anspruch 7, dadurch gekennzeichnet, daß das Verbindungselement (37) im allgemeinen U-förmig ist, wobei die Enden der Schenkel des U die Verriegelungselemente (38, 39) liefern und die Basis (4) des U darin die Öffnung (36) für das Verbindungselement aufweist.

9. Eine Verbindung nach irgendeinem der Ansprüche 1 bis 5, dadurch gekennzeichnet, daß das Spannteil (50) einteilig mit einem oder mehreren Verriegelungselement(en) (51, 52) vorgesehen ist, wobei das oder jedes Verriegelungselement (51, 52) sich in einer entsprechenden Öffnung(41, 41a, 42, 42a) in dem ersten Bauteil befindet.

10. Eine Verbindung nach irgendeinem der Ansprüche 6 bis 9, dadurch gekennzeichnet, daß das Spannteil (26; 50) in im wesentlichen derselben Weise, wie das Spannteil an dem ersten Bauteil (12) gesichert ist, an dem zweiten Bauteil (13) gesichert ist, wobei ein oder mehrere Verbindungselement(e) (33a) Verwendung finden und ein oder mehrere Verriegelungselement(e) (38, 39;53, 54) in einer jeweiligen Öffnung (41a, 42a) des zweiten Bauteils (13) aufgenommen und an dem Spannteil gesichert ist/sind.

11. Eine Verbindung nach irgendeinem der vorangehenden Ansprüche, dadurch gekennzeichnet, daß die ersten und zweiten Bauteile (12, 13) sich quer zu einem weiteren länglichen Bauteil (61) erstrecken, an dem die Pfettenkomponenten durch eine Knagge (60) angebracht sind, wobei die Bauverbindung zwischen den Bauteilen benachbart zu der Position, an der die Knagge (60) angebracht ist, bereitgestellt wird.

12. Eine Verbindung nach Anspruch 11, dadurch gekennzeichnet, daß die ersten und zweiten Bauteile (12, 13) jeweils Komponenten einer Pfette umfassen und das weitere Bauteil (61) einen Deckenträger, Sparren oder dergleichen umfaßt.

13. Eine Verbindung nach Anspruch 11 oder Anspruch 12, dadurch gekennzeichnet, daß die Knagge (60) mit einer Öffnung versehen ist, die der oder jeder Öffnung (41, 42, 41a, 42a) des ersten oder zweiten Bauteils (12, 13) entspricht, wodurch das oder jedes Verriegelungselement (38, 39; 51, 52) im Gebrauch in der Öffnung der Knagge (60) angeordnet sein kann, um der Bauverbindung zusätzliche Steifigkeit zu geben.

14. Ein Verfahren zum Miteinanderverbinden von ersten und zweiten Bauteilen (12, 13), worin die Bauteile jeweils einen länglichen profilierten Metallabschnitt mit einem Steg (14) und einem Flansch (19) umfassen und worin das Verfahren ein Plazieren der ersten und zweiten Bauteile (12, 13) mit aneinander befindlichen Enden und Bereitstellen eines Spannteils (26; 50) einschließt, das sich zwischen den ersten und zweiten Bauteilen erstreckt, und worin das Spannteil (26; 50) durch ein Verbindungselement (33), das sich durch jeweilige ausgerichtete Öffnungen (34) in dem ersten Bauteil (12) und dem Spannteil (26; 50) erstreckt, wobei das erste Bauteil (12) eine Öffnung (41, 42) aufweist, und ein Verriegelungselement (38, 39;51, 52), das einteilig mit dem Spannteil (26; 50) vorgesehen oder daran gesichert ist, mit dem ersten Bauteil verbunden wird, wobei das Verfahren weiterhin umfaßt ein Anordnen des Verriegelungselements (38, 39;51, 52) in der Öffnung (41, 42) des ersten Bauteils und Miteinanderverbinden der ersten Bauteile (12) und des Spannteils (26; 50) durch Mittel, die das Verbindungselement (33) umfassen, dadurch gekennzeichnet, daß Spannteil (26; 50) derart in dem Profil der Bauteile (12, 13) angeordnet wird, daß ein erster Teil (28) neben dem Flansch (19) jedes Bauteils (12, 13) liegt und ein zweiter Teil (29) neben dem Steg (14) jedes Bauteils liegt.

15. Ein Verfahren nach Anspruch 14, das die Schritte umfaßt: Sichem des Spannteils (26, 50) und somit des Verrriegelungselements (38, 39;51, 52) an dem zweiten Bauteil (13) Ausrichten einer Öffnung (41, 42) des Spannteils zu einer Öffnung (41, 42) des ersten Bauteils (12), Anordnen des Verriegelungselements (38, 39;51, 52) in den ausgerichteten Öffnungen (41, 42) und Verbinden des Spannteils (26, 50) mit dem ersten Bauteil (12).

16. Ein Verfahren nach Anspruch 15, dadurch gekennzeichnet, daß das Verriegelungselement (38, 39; 51, 52) auf einem Verbindungselement (37) gelagert wird, das auch eine Öffnung (36) aufweist, die zu den Öffnungen (34) des ersten Bauteils (12) und des Spannteils (26; 50) ausgerichtet ist, wobei das Verfahren die Schritte einschließt: Sichern des Verbindungselement (37) an dem ersten Bauteil (12) und dem Spannteil (26; 50) mit dem Verbindungselement (33) und somit des Verriegelungselements (38, 39; 51, 52) an dem ersten Bauteil.

## Revendications

1. Assemblage entre des premier et second éléments structurels (12, 13) dans lequel les éléments structurels (12, 13) comprennent chacun une section de métal profilé allongée comportant un replat (14) et un rebord (19) et sont disposés en relation de bout à bout et un élément d'enjambement (26 ; 50) se trouve entre ceux-ci et est fixé aux premier et second éléments structurels (12, 13) et dans lequel l'élément d'enjambement (26 ; 50) et le premier élément structurel (12) sont fixés ensemble par un élément de fixation (33) qui passe à travers des ouvertures alignées (34, 36) dans l'élément d'enjambement (26 ; 50) et un premier élément structurel (12), le premier élément structurel (12) présentant une ouverture (41, 42), un élément de blocage (38, 51) étant solidairement muni de, ou en utilisation, fixé par rapport à l'élément d'enjambement (26 ; 50) et un moyen comprenant ledit élément de fixation (33) assemblant le premier élément structurel (12) et l'élément d'enjambement (26 ; 50) ensemble, l'élément de blocage (38, 51) étant placé dans l'ouverture (41, 42) du premier élément (12), caractérisé en ce que l'élément d'enjambement (26 ; 50) est disposé à l'intérieur du profil des éléments structurels (12, 13) d'une manière telle qu'une première partie (28) s'étend le long du rebord (19) de chaque élément structurel (12, 13) et qu'une seconde partie (29) s'étend le long du replat (14) de chaque élément structurel.

2. Assemblage selon la Revendication 1, dans lequel une troisième partie (32) de l'élément d'enjambement (26 ; 50) s'étend le long d'une partie plate supplémentaire (17) de chaque élément structurel (12, 13), ladite partie plate supplémentaire (17) étant transversale à une partie plate (15) le long de laquelle la seconde partie (29) s'étend et étant espacée dudit rebord (19), le long de laquelle la seconde partie (28) s'étend.

3. Assemblage selon la Revendication 1 ou la Revendication 2, dans lequel chaque élément structurel (12, 13) comprend un replat (14) présentant un rebord (19, 20) au niveau des extrémités opposées.

4. Assemblage selon l'une quelconque des Revendications précédentes, dans lequel les éléments structurels (12, 13) comprennent chacun une poutrelle généralement en forme de sigma comportant un replat (14) avec des rebords parallèles (19, 20) à ses extrémités, avec des lèvres respectives tournées vers l'intérieur (21, 22) à leurs extrémités libres, les rebords (19, 20) s'étendant chacun généralement perpendiculairement à une partie médiane (M) du replat qui est assemblée par des parties plates supplémentaires inclinées, de manière opposée, (17, 18) aux replats (15, 16) qui s'étendent perpendiculairement aux rebords (19, 20).

5. Assemblage selon la Revendication 3 ou la Revendication 4, dans lequel l'assemblage comprend deux éléments d'enjambement (26, 27, 50) disposés à l'intérieur du profil des éléments structurels (12, 13) avec une première partie respective s'étendant le long de chaque rebord (19, 20).

6. Assemblage selon l'une quelconque des Revendications précédentes, dans lequel l'élément de blocage (38) est prévu sur un élément d'assemblage (37), l'élément d'assemblage présentant une ouverture (36) qui est alignée avec les ouvertures (34) de l'élément d'enjambement (26 ; 50) et le premier élément structurel (12), les ouvertures alignées (34, 36) recevant l'élément de fixation (33) pour permettre à l'élément d'assemblage (37) et à l'élément d'enjambement (26 ; 50) d'être fixé au premier élément structurel.

7. Assemblage selon la Revendication 6, dans lequel l'élément d'assemblage (37) comprend un second élément de blocage (39), l'ouverture (34) pour l'élément de fixation (33), étant placé entre les deux éléments de blocage et les éléments (12, 26) avec lesquels l'élément d'assemblage est mis en prise présentant des secondes ouvertures alignées (41, 42), dans lesquelles le second élément de blocage est placé.

8. Assemblage selon la Revendication 7, dans lequel l'élément d'assemblage (37) est généralement en forme de U, les extrémités des branches du U fournissant les éléments de blocage (38, 39) et la base (4) du U présentant, prévue dans celle-ci, l'ouverture (36) pour l'élément de fixation.

9. Assemblage selon l'une quelconque des Revendications 1 à 5, dans lequel l'élément d'enjambement (50) est solidairement muni d'un ou plusieurs éléments de blocage (51 ; 52), l'élément de blocage ou chaque élément de blocage (51, 52) est placé dans une ouverture correspondante (41, 41a, 42, 42a) dans le premier élément structurel.

10. Assemblage selon l'une quelconque des Revendications 6 à 9, dans lequel l'élément d'enjambement (26 ; 50) est fixé au second élément structurel (13) de manière sensiblement similaire à celle dans laquelle l'élément d'enjambement est fixé au premier élément structurel (12) en utilisant un ou plusieurs éléments de fixation (33a) et en ce qu'un ou plusieurs éléments de blocage (38; 39 ; 53, 54) sont reçus dans une ouverture respective (41a, 42a) du second élément structurel (13) et fixés par rapport à l'élément d'enjambement.

11. Assemblage selon l'une quelconque des Revendications précédentes, dans lequel les premier et second éléments structurels (12, 13) s'étendent transversalement vers un élément structurel allongé supplémentaire(61), par rapport auquel les composants de pannes sont fixés par une clavette (60), l'assemblage structurel entre les éléments structurels étant prévu adjacent à la position où la clavette (60) est fixée.

12. Assemblage selon la Revendication 11, dans lequel les premier et second éléments structurels (12, 13) comprennent chacun des composants d'une panne et l'élément structurel supplémentaire (61) comprend une solive, un chevron ou analogues.

13. Assemblage selon la Revendication 11 ou la Revendication 12, dans lequel la clavette (60) est munie d'une ouverture correspondant à l'ouverture ou à chaque ouverture (41, 42, 41a, 42a) du premier ou du second élément structurel (12, 13), d'où il résulte que l'élément de blocage ou chaque élément de blocage (38, 39 ; 51, 52) peut, en utilisation, être placé dans l'ouverture de la clavette (60) pour ajouter encore davantage de rigidité à l'assemblage structurel.

14. Procédé d'assemblage de premier et second éléments structurels (12, 13) dans lequel les éléments structurels comprennent chacun une section de métal profilé allongé comportant un replat (14) et un rebord (19) et dans lequel le procédé comprend les étapes consistant à placer les premier et second éléments structurels (12, 13) bout à bout et prévoir un élément d'enjambement (26 ; 50) pour se trouver entre les premier et second éléments structurels et dans lequel l'élément d'enjambement (26 ; 50) est assemblé au premier élément structurel par un élément de fixation (33) qui passe à travers des ouvertures respectives alignées (34) dans le premier élément structurel (12) et dans l'élément d'enjambement (26 ; 50), le premier élément structurel (12) présentant une ouverture (41, 42), un élément de blocage (38, 39 ; 51, 52) étant solidairement muni de, ou fixé par rapport à l'élément d'enjambement (26 ; 50), le procédé comprenant de plus l'étape consistant à placer l'élément de blocage (38 39 ; 51, 52) dans l'ouverture (41, 42) du premier élément structurel et assembler les premiers éléments structurels (12) et l'élément d'enjambement (26 ; 50) ensemble par un moyen comprenant ledit élément de fixation (33), caractérisé en ce que l'élément d'enjambement (26 ; 50) est disposé à l'intérieur du profil des éléments structurels (12, 13) d'une manière telle qu'une première partie (28) s'étend le long du rebord (19) de chaque élément structurel (12, 13) et qu'une seconde partie (29) s'étend le long du replat (14) de chaque élément structurel.

15. Procédé selon la Revendication 14, comprenant l'étape consistant à fixer l'élément d'enjambement (26 ; 50) et ainsi l'élément de blocage (38,39 ; 51, 52) par rapport au second élément structurel (13), à aligner une ouverture (41, 42) de l'élément d'enjambement avec une ouverture (41, 42) du premier élément structurel (12), à placer l'élément de blocage (38,39 ; 51, 52) dans les ouvertures alignées (41, 42) et à assembler l'élément d'enjambement (26 ; 50) avec le premier élément structurel (12).

16. Procédé selon la Revendication 15, dans lequel l'élément de blocage (38,39 ; 51, 52) est supporté sur un élément d'assemblage (37) qui présente également une ouverture (36) qui est alignée avec les ouvertures (34) du premier élément structurel (12) et de l'élément d'enjambement (26 ; 50), le procédé incluant l'étape consistant à fixer l'élément d'assemblage (37) au premier élément structurel (12) et à l'élément d'enjambement (26 ; 50) avec l'élément de fixation (33) et de fixer ainsi l'élément de blocage (38,39 ; 51, 52) par rapport au premier élément structurel.
